# EUROPEAN PATENT APPLICATION

(11) **EP 2 236 867 A1**
(43) Date of publication of application: **06.10.2010**
(21) Application number: 10003241.6
(22) Date of filing: 26.03.2010
(51) Int. Cl.: F16J 15/32, F01L 3/08

(54) **Sealing Device**

(30) Priority: 03.04.2009 JP 2009090726
(71) Applicant: Carl Freudenberg KG, 69469 Weinheim (DE)
(72) Inventor: Ryota, Okubo, Nagaikawa, Fukushima-shi Fukushima-ken (JP)

(57) **Abstract**

An object of the present invention is to provide a sealing device capable of maintaining a satisfactory sealing performance between a valve stem seal and a valve stem guide without separation of the valve stem seal even under a high port pressure, the valve stem seal being provided separately from a spring retaining portion.

There is provided a sealing device in which a spring retaining portion (30) of a valve spring (40) is provided separately from a valve stem seal (7), the valve stem seal including a cylindrical metallic ring (1), a rubber-elastic seal lip (2) sealing a valve stem and provided in one end of the metallic ring while sliding on the valve stem, and sealing-fitting means (6) sealing an outer peripheral surface of a valve stem guide (5) provided in the inner peripheral side of the metallic ring while being fitted to the outer peripheral surface, wherein the sealing-fitting means includes a metallic fitting portion (61) in which the metallic ring directly contacts the outer peripheral surface of the valve stem guide, and a rubber-elastic rubber fitting portion (62) which is integrally retained in the inner peripheral surface of the metallic ring so as to contact the outer peripheral surface of the valve stem guide.

## Description

### BACKGROUND OF THE INVENTION

### Field of the Invention

The present invention relates to a sealing device, and more specificity to a sealing device used for a valve stem.

### Description of the Related Art

Hitherto, a valve stem seal has been known as a kind of a lip seal with a metallic ring, and the valve stem seal is broadly classified into a valve stem seal provided integrally with a spring retaining portion and a valve stem seal provided separately from a spring retaining portion. (Patent Document 1)

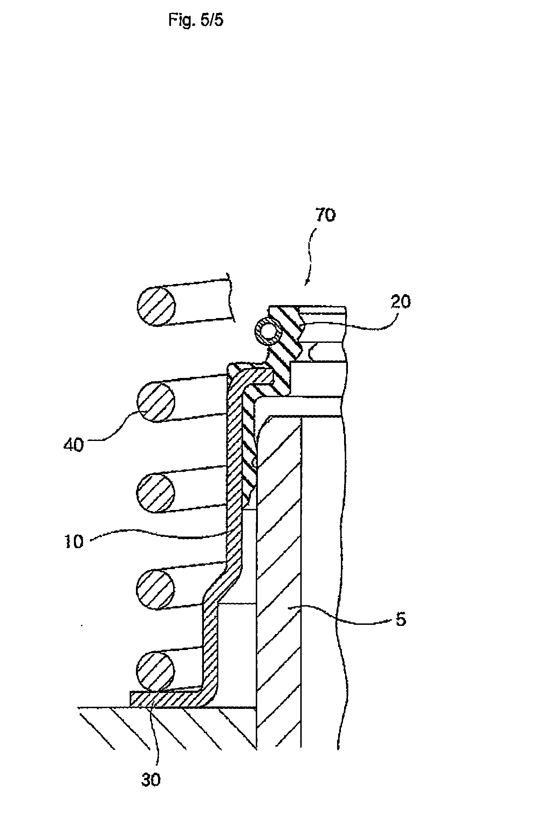

As shown in Fig. 5, in a valve stem seal 70 provided integrally with a spring retaining portion, a seal lip 20 is integrally fixed to one end of a metallic ring 10 by baking, and a spring retaining portion 30 for receiving a spring (valve spring) 40 is provided in another end of the metallic ring 10.

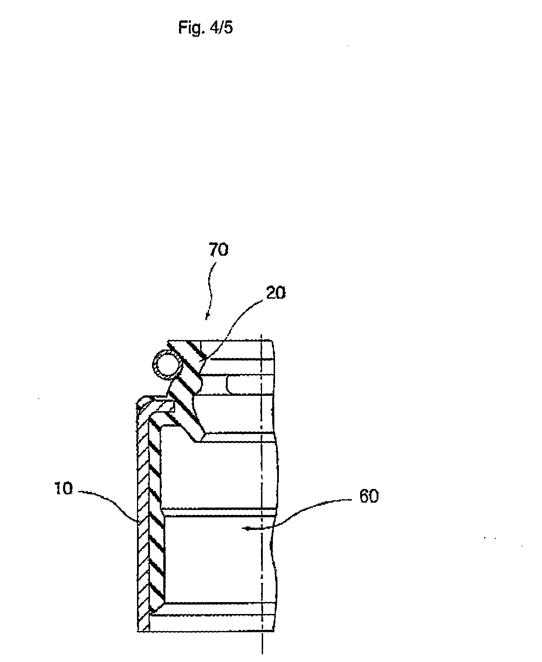

On the other hand, as shown in Fig. 4, since a valve stem seal 70 provided separately from a spring retaining portion is configured such that the metallic ring 10 of the seal lip 20 is provided separately from a spring retaining portion (not shown) for receiving a valve spring, in this case, the spring retaining portion is directly attached to a cylinder head.

However, according to the former valve stem seal provided integrally with the spring retaining portion, there is a defect that although the overall number of components can be reduced, since there is a need to provide a curing process for the spring retaining portion 30 of the metallic ring 10, a lot of effort and time is required for the manufacturing of the metallic ring 10, and because the seal ring 20 has to be baked to the large metallic ring 10, the molding cost may increase, thereby increasing the costs.

In addition, according to the latter valve stem seal provided separately from the spring retaining portion, there is a risk that since the valve stem seal 70 is retained on an outer peripheral surface of a valve stem guide 5 by a rubber fitting portion 60, when a port pressure becomes high, a valve stem seal 70 may become separated from the valve stem guide 5.

As a result, when the fitting force of the rubber fitting portion 60 is increased so as to reduce the risk that the valve stem seal 70 is separated from the valve stem guide 5, there is a problem in that the rubber is permanently deformed.

In particular, in a case where the rubber fitting portion 60 is formed in a lip shape and has a configuration with an improved sealing function, it is difficult to obtain a sufficient fitting force.

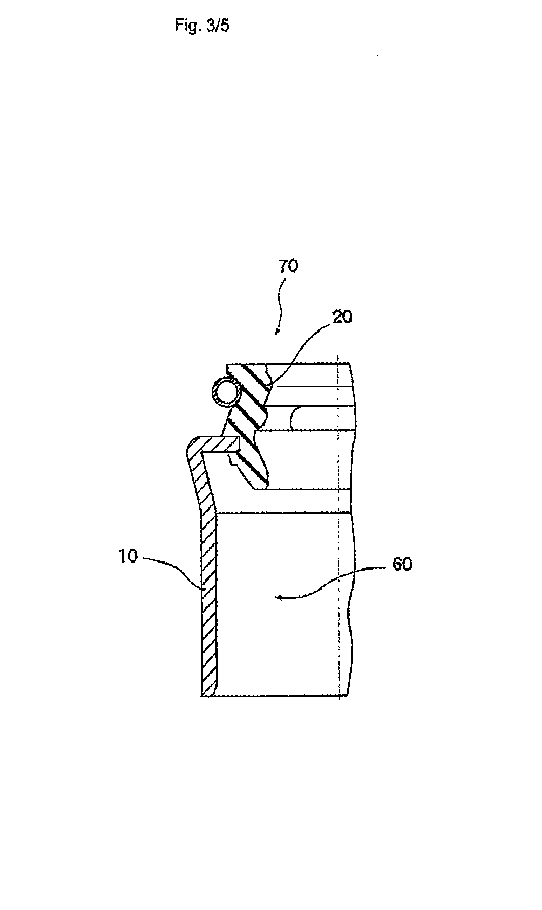

Thus, a metallic fitting type valve stem seal 70 as shown in Fig. 3 has been proposed which does not have the risk of the separation even under a high port pressure,

However, when the metallic fitting type valve stem seal 70 is attached to the outer peripheral surface of the valve stem guide 5, a large force is required, and the seal property of the metallic fitting surface 60 is insufficient.
[Patent Document 1] Japanese Patent Application Laid-Open No.2003-343734
[Patent Document 2] Japanese Patent Application Laid-Open No.2004-011867

### SUMMARY OF THE INVENTION

The present invention has been made in view of the above circumstances and an object thereof is to provide a sealing device which is capable of maintaining a satisfactory sealing performance between a valve stem seal and a valve stem guide without separation of the valve stem seal even under a high port pressure, the valve stem seal being provided separately from a spring retaining portion.

The present invention provides a sealing device in which a spring retaining portion of a valve spring is provided separately from a valve stem seal, the valve stem seal including a cylindrical metallic ring, a rubber-elastic seal lip that seals a valve stem provided in one end of the metallic ring while sliding on the valve stem, and a sealing-fitting means that seals an outer peripheral surface of a valve stem guide provided in the inner peripheral side of the metallic ring while being fitted to the outer peripheral surface, wherein the sealing-fitting means includes a metallic fitting portion in which the metallic ring directly contacts the outer peripheral surface of the valve stem guide, and a rubber-elastic rubber fitting portion which is integrally retained in an inner peripheral surface of the metallic ring so as to contact the outer peripheral surface of the valve stem guide.

The present invention exhibits the effects as described hereinafter.

According to a sealing device of the invention described in Claim 1, in a valve stem seal provided separately from a spring retaining portion, a satisfactory sealing performance can be maintained between the valve stem seal and the valve stem guide without separation of the valve stem seal even under a high port pressure.

Furthermore, according to the sealing device of the invention described in Claim 2, because the rubber fitting portion can prevent oil from permeating into the metallic fitting portion, a strong fitting force of the metallic fitting portion can be maintained.

In addition, according to the sealing device of the invention described in Claim 3, it is possible to suppress the molding cost to be a low level.

Furthermore, according to the sealing device of the invention described in Claim 4, since an excessive fitting force is not required for the rubber fitting portion, a satisfactory seal performance by the lip can be maintained.

In addition, according to the sealing device of the invention described in Claim 5, a more satisfactory seal performance can be maintained.

### BRIEF DESCRIPTION OF THE DRAWINGS

- Fig. 1: is a side view of a sealing device according to the present invention.
- Fig. 2: is a diagram showing a state in which the sealing device of Fig. 1 is mounted to a valve stem guide.
- Fig. 3: is a sectional view of a sealing device provided separately from a spring retainer according to a related art.
- Fig. 4: is a sectional view of another sealing device provided separately from a spring retainer according to a related art.
- Fig. 5: is a sectional view of a sealing device provided integrally with a spring retainer according to a related art.

### DESCRIPTION OF THE PREFERRED EMBODIMENTS

Hereinafter, the most preferred embodiment for carrying out the present invention will be described.

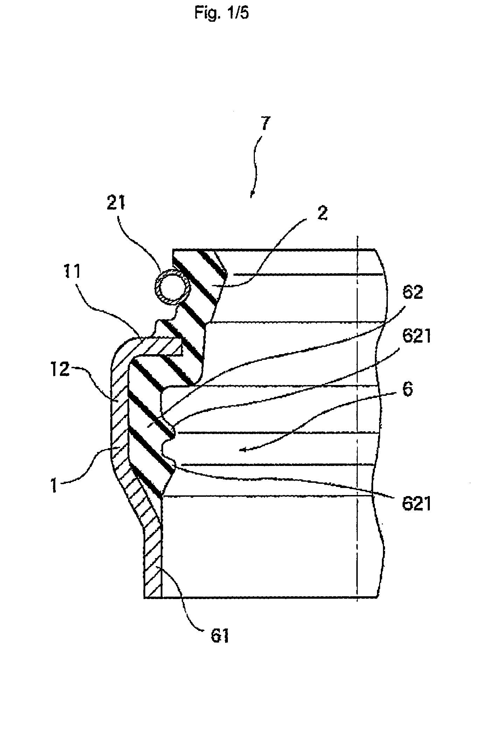

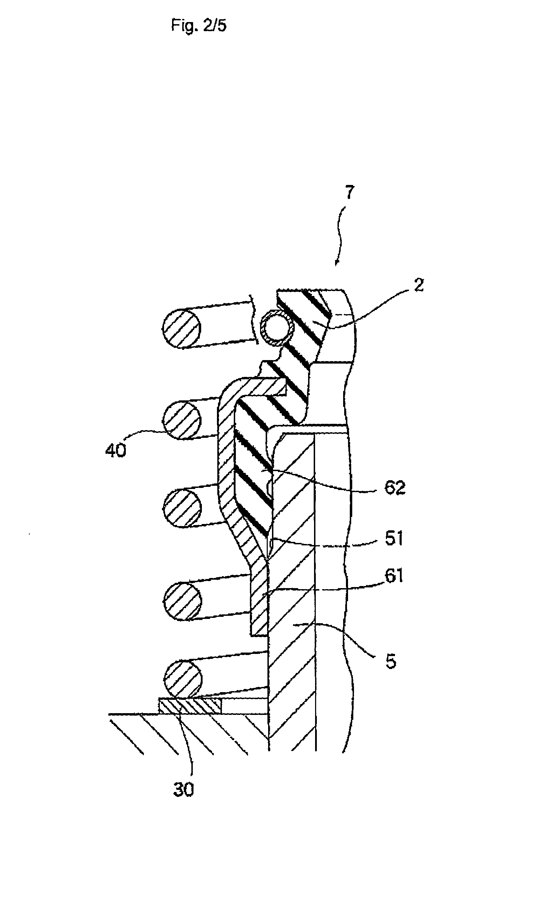

The most preferred embodiment for carrying out the present invention will be described based on Figs. 1 and 2.

Fig. 1 is a side view of a sealing device according to the present invention.

Fig. 2 is a diagram in which the sealing device in Fig. 1 is mounted to a valve stem guide.

In Fig. 1, a valve stem seal 7 constituting a sealing device according to the present invention includes a cylindrical metallic ring 1, a rubber-elastic seal lip 2 that seals a valve stem provided in one end of the metallic ring 1 while sliding on the valve stem 1, and a sealing-fitting means 6 that seals an outer peripheral surface of a valve stem guide 5 and is provided in the inner peripheral side of the metallic ring 1 while being fitted to the outer peripheral surface.

Furthermore, the sealing-fitting means 6 includes a metallic fitting portion 61 in which the metallic ring 1 directly contacts the outer peripheral surface of the valve stem guide 5, and a rubber-elastic rubber fitting portion 62 which is integrally retained in the inner peripheral surface of the metallic ring 1 so as to contact the outer peripheral surface of the valve stem guide 5.

Furthermore, the sealing device according to the present invention is a valve stem seal provided separately from the spring retainer in which the spring retaining portion of the valve spring is provided separately from the valve stem seal 7.

In addition, the metallic ring 1 has the cylindrical metallic fitting portion 61 at one end thereof, a flange portion 11 at another end thereof, and an enlarged-diameter cylinder portion 12. The cylindrical metallic fitting portion 61 is directly fitted into the outer peripheral surface of the valve stem guide 5, the flange portion 11 is formed integrally by the vulcanization bonding of the seal lip 2, and the enlarged-diameter cylinder portion 12 connects the flange portion 11 with the metallic fitting portion 61.

In general, the cylindrical metallic ring 1 is produced by press molding or the like from a plate-shaped steel plate.

The seal lip 2 a valve stem seal and is slidably close to an outer peripheral surface of (not shown).

Furthermore, in order to adjust the closing force of the seal lip 2 to the valve, a coil spring 21 is disposed on the outer peripheral surface of the seal lip 2.

In addition, on the inner peripheral surface of the enlarged-diameter cylinder portion 12, the rubber fitting portion 62, which is simultaneously formed of the same rubber elastic material as the seal lip 2, is bonded by vulcanization.

On the rubber fitting portion 62, two lip-shaped portions 621 and 621 are formed which protrude from the inner peripheral surface of the metallic fitting portion 61 to the inner side.

Furthermore, as shown in Fig. 2, an outer diameter of the valve stem guide 5 into which the metallic fitting portion 61 is fitted is larger than an outer diameter of the valve stem guide 5 with which the rubber fitting portion 62 comes in sealing contact, whereby a step 51 exists therebetween.

For this reason, because of the existence of a step 51, damage to the rubber fitting portion 62 can be effectively prevented.

As the rubber elastic material, a fluorine rubber, an NBR, a silicone rubber or the like may be suitably selected and used.

In this manner, the lip-shaped portions 621 and 621 of the rubber fitting portion 62 can reliably prevent the passage of the oil, and the fitting force of the metallic fitting portion 61 with the outer peripheral surface of the valve stem guide 5 can prevent the separation of the valve stem seal 7 from the valve stem guide 5,

As a result, since the rubber fitting portion 62 does not need an excessive fitting force, the lip-shaped portions 621 and 621 are not subjected to excessive deformation, thus it is possible to maintain a satisfactory sealing function due to the lip-shaped portions 621 and 621 for a long period.

In addition, although in the present embodiment, the rubber fitting portion 62 and the seal lip 2 have been formed integrally with the metallic ring 1 by vulcanization bonding, the rubber fitting portion 62 may be bonded and fixed to the inner peripheral surface of the metallic ring 1 after being formed separately.

Furthermore, it is needless to say that the present invention is not limited to the above-mentioned preferred embodiment for carrying out the invention, but can adopt various other structures without departing from the gist of the present invention.

## Claims

1. A sealing device in which a spring retaining portion (30) of a valve spring (40) is provided separately from a valve stem seal (7), the valve stem seal (7) including a cylindrical metallic ring (1), a rubber-elastic seal lip (2) sealing a valve stem provided in one end of the metallic ring (1) while sliding on the valve stem, and a sealing-fitting means (6) sealing an outer peripheral surface of a valve stem guide (5) and being provided in an inner peripheral side of the metallic ring (1) while being fitted to the outer peripheral surface, wherein the sealing-fitting means (6) includes a metallic fitting portion (61) in which the metallic ring (1) directly contacts the outer peripheral surface of the valve stem guide (5), and a rubber-elastic rubber fitting portion (62) which is integrally retained in the inner peripheral surface of the metallic ring (1) so as to contact the outer peripheral surface of the valve stem guide (5).

2. The sealing device as claimed in claim 1, wherein the rubber fitting portion (62) is disposed closer to the seal lip (2) than the metallic fitting portion (61).

3. The sealing device as claimed in claim 2, wherein the rubber fitting portion (62) is formed at the same time as the seal lip (2) is formed.

4. The sealing device as claimed in any one of claims 1 to 3, wherein the rubber fitting portion (62) is formed with a lip-shaped portion (621).

5. The sealing device as claimed in claim 4, wherein the number of the lip-shaped portions (621) is two.
